# EUROPEAN PATENT APPLICATION

(11) **EP 4 669 014 A1**
(43) Date of publication of application: **24.12.2025**
(21) Application number: 23921798.7
(22) Date of filing: 15.02.2023
(51) Int. Cl.: H04W 76/10

(54) **INDIRECT PATH ADDING METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2023/076301
(87) International publication number: WO 2024/168635

(57) **Abstract**

Disclosed in embodiments of the present disclosure are an indirect path adding method and apparatus. The method comprises: receiving first instruction information sent by a network device, the first instruction information comprising an identifier of a target second terminal, and the first instruction information being used for instructing to add to a first terminal an indirect path between the first terminal and the network device that are connected by means of the target second terminal; and in response to determining that the addition of the indirect path fails, sending second indication information to the network device, the second indication information being used for indicating that the addition of the indirect path fails. Thus, in a scenario in which a network adds an indirect path to a remote terminal, the remote terminal can determine that the addition of the indirect path fails, and can report the addition failure result to the network in a timely manner, so that the network can perform adjustment in a timely manner, thereby avoiding service interruption, effectively improving the quality of service, and improving the transmission rate and transmission reliability.

## Description

### FIELD

The present disclosure relates to the field of communication technologies, and in particular to a method and an apparatus for adding an indirect link.

### BACKGROUND

In a communication system, in order to support direct communication between terminals, a sidelink communication method is introduced, and a communication interface between the terminals may be PC-5.

### SUMMARY

In a first aspect, embodiments of the present disclosure provide a method for adding an indirect link. The method is performed by a first terminal, and includes: receiving first indication information sent by a network device, in which, the first indication information indicates the first terminal to add the indirect link, and the first indication information includes an identifier of a target second terminal; adding, based on the first indication information, the indirect link connected to the network device via the target second terminal; and sending second indication information to the network device in response to determining a failure to add the indirect link, in which, the second indication information indicates the failure to add the indirect link.

In a second aspect, embodiments of the present disclosure provide a method for adding an indirect link. The method is performed by a network device, and includes: sending first indication information to a first terminal, in which, the first indication information includes an identifier of a target second terminal, the first indication information indicates the first terminal to add the indirect link connected to the network device via the target second terminal; and receiving second indication information being sent by the first terminal in response to determining a failure to add the indirect link, in which, the second indication information is used to indicate the failure to add the indirect link.

In a third aspect, embodiments of the present disclosure provide an apparatus for adding an indirect link. The apparatus is configured in a first terminal, and includes: a transceiver unit, configured to receive first indication information sent by a network device, in which, the first indication information indicates the first terminal to add the indirect link, and the first indication information includes an identifier of a target second terminal; a processing unit, configured to add, based on the first indication information, the indirect link connected to the network device via the target second terminal; and the transceiver unit being further configured to send second indication information to the network device in response to determining a failure to add the indirect link, in which, the second indication information indicates the failure to add the indirect link.

In a fourth aspect, embodiments of the present disclosure provide an apparatus for adding an indirect link. The apparatus is configured in a network device, and includes: a transceiver unit, configured to send first indication information to a first terminal, in which, the first indication information includes an identifier of a target second terminal, the first indication information indicates the first terminal to add the indirect link connected to the network device via the target second terminal; and the transceiver unit being further configured to receive second indication information being sent by the first terminal in response to determining a failure to add the indirect link, in which, the second indication information indicates the failure to add the indirect link.

In the fifth aspect, embodiments of the present disclosure provide a communication device, including a processor and a memory, where the memory is configured to store a computer program; the processor is configured to execute the computer program stored in the memory to cause the communication device to perform the method for adding an indirect link as described in the first aspect.

In a sixth aspect, embodiments of the present disclosure provide a communication device, including a processor and a memory, where the memory is configured to store a computer program; the processor is configured to execute the computer program stored in the memory to cause the communication device to perform the method for adding an indirect link as described in the second aspect.

In a seventh aspect, embodiments of the present disclosure provide a communication device, including a processor and an interface circuit, where the interface circuit is configured to receive code instructions and transmit them to the processor, and the processor is configured to execute the code instructions to cause the apparatus to perform the method for adding an indirect link as described in the first aspect.

In an eighth aspect, embodiments of the present disclosure provide a communication device, including a processor and an interface circuit, where the interface circuit is configured to receive code instructions and transmit them to the processor, and the processor is configured to execute the code instructions to cause the apparatus to perform the method for adding an indirect link as described in the second aspect.

In a ninth aspect, embodiments of the present disclosure provide a computer readable storage medium, configured to store instructions used by the remote terminal described above, and when the instructions are executed, the remote terminal is caused to perform the method for adding an indirect link as described in the first aspect.

In a tenth aspect, embodiments of the present disclosure provide a readable storage medium, configured to store instructions used by the network device described above, and when the instructions are executed, the network device is caused to perform the method for adding an indirect link as described in the second aspect.

In an eleventh aspect, the present disclosure further provides a computer program product including a computer program, which, when executed on a computer, causes the computer to perform the method for adding an indirect link as described in the first aspect.

In a fifteenth aspect, the present disclosure further provides a computer program product including a computer program, which, when executed on a computer, causes the method for adding an indirect link as described in the second aspect.

In a twelfth aspect, the present disclosure provides a computer program, which, when executed on a computer, causes the computer to perform the method for adding an indirect link as described in the second aspect.

According to the method and apparatus for adding an indirect link provided in the embodiments of the present disclosure, the first indication information sent by the network device is received, the first indication information indicates the first terminal to add the indirect link, and the first indication information includes the identifier of the target second terminal, the indirect link connected to the network device via the target second terminal is added based on the first indication information. The second indication information is sent to the network device in response to determining the failure to add the indirect link, and the second indication information indicates the failure to add the indirect link. Therefore, in a scenario where the network adds an indirect link for a remote terminal, the remote terminal may determine the failure to add the indirect link, and may promptly report a result of the failure to add the indirect link to the network, so that the network can make timely adjustments to avoid service interruption, thus effectively improving a service quality, a transmission rate and transmission reliability.

Additional aspects and advantages of the present disclosure will be partially given in the following description, and some will become obvious from the following description, or be understood through practice of the present disclosure.

### BRIEF DESCRIPTION OF THE DRAWINGS

To better clarify technical solutions of embodiments of the present disclosure or the background, drawings used in the embodiments of the present disclosure or the background are described hereinafter.
FIG. 1 is a schematic diagram of an architecture of a communication system according to embodiments of the present disclosure.
FIG. 2 is a flowchart of a method for adding an indirect link according to an embodiment of the present disclosure.
FIG. 3 is a flowchart of a method for adding an indirect link according to an embodiment of the present disclosure.
FIG. 4 is a flowchart of a method for adding an indirect link according to an embodiment of the present disclosure.
FIG. 5 is a flowchart of a method for adding an indirect link according to an embodiment of the present disclosure.
FIG. 6 is a structural schematic diagram of an apparatus for adding an indirect link according to an embodiment of the present disclosure.
FIG. 7 is a structural schematic diagram of an apparatus for adding an indirect link according to an embodiment of the present disclosure.
FIG. 8 is a structural schematic diagram of an apparatus for adding an indirect link according to an embodiment of the present disclosure.
FIG. 9 is a structural schematic diagram of a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, are intended to explain the present disclosure and cannot be construed as limiting the present disclosure.

In order to better understand a method and an apparatus for adding an indirect link according to embodiments of the present disclosure, a communication system to which embodiments of the present disclosure are applicable is first described hereinafter.

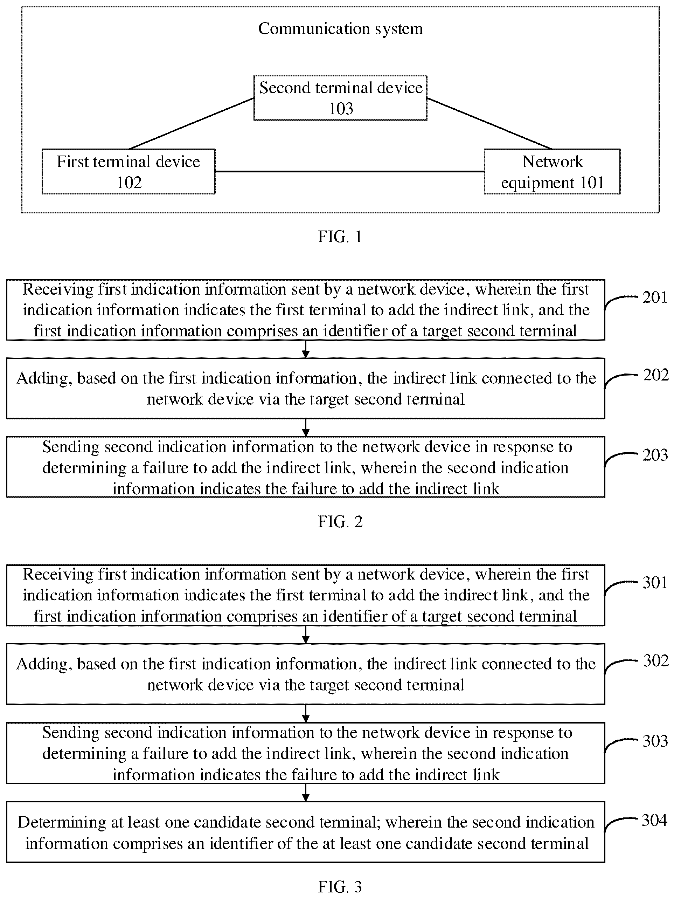

Reference is made to FIG. 1, which is a schematic diagram of an architecture of a communication system according to an embodiment of the present disclosure. The communication system may include, but is not limited to, one network device, one first terminal and one second terminal. The quantity and forms of devices shown in FIG. 1 are only for examples and do not constitute a limitation on the embodiments of the present disclosure. In actual applications, two or more than two network devices, two or more than two first terminals and two or more than two second terminals may be included. In FIG. 1, a case where the communication system includes one network device 101, one first terminal 102 and one second terminal 102 is taken as an example.

It should be noted that the technical solutions of the embodiments of the present disclosure can be applied to various communication systems, such as a long term evolution (Long Term Evolution, LTE) system, a 5th generation (5th Generation, 5G) mobile communication system, a 5G new radio (New Radio, NR) system, or other new mobile communication systems in the future.

The network device 101 in the embodiments of the present disclosure is an entity on a network side for transmitting or receiving signals. For example, the network device 101 may be an evolved NodeB (evolved NodeB, eNB), a transmission reception point (Transmission Reception point, TRP), a next generation NodeB (next generation NodeB, gNB) in an NR system, a base station in other mobile communication systems in the future, or an access node in a wireless fidelity (Wireless Fidelity, WiFi) system, etc. The specific technologies and the specific device form used by the network device are not limited in the embodiments of the present disclosure. The network device according to the embodiments of the present disclosure may include a central unit (Central Unit, CU) and a distributed unit (Distributed Unit, DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The first terminal 102 and the second terminal 102 in the embodiments of the present disclosure are both entities on a user side for receiving or transmitting signals, such as a mobile phone. The terminal may also be referred to as a terminal device (Terminal), a user equipment (User Equipment, UE), a mobile station (Mobile Station, MS), a mobile terminal (Mobile Terminal, MT), etc. The terminal may be a car with a communication function, a smart car, a mobile phone, a wearable device, a tablet computer (Pad), a computer with a wireless reception and transmission function, a virtual reality (Virtual Reality, VR) terminal, an augmented reality (Augmented Reality, AR) terminal, a wireless terminal in industrial control (industrial control), a wireless terminal in self-driving (Self-driving), a wireless terminal in a remote medical surgery (Remote medical surgery), a wireless terminal in a smart grid (Smart Grid), a wireless terminal in transportation safety (Transportation Safety), a wireless terminal in a smart city (Smart City), a wireless terminal in a smart home (Smart Home), etc. The specific technologies and the specific device form used by the terminal are not limited in the embodiments of the present disclosure.

In a communication system, in order to support direct communication between terminals, a sidelink communication method is introduced, and a communication interface between the terminals may be PC-5. According to a correspondence between a sending terminal and a receiving terminal, three transmission modes, including unicast, multicast and broadcast, are supported on the sidelink.

In related arts, a first terminal 102 may communicate with the network device 101 via relay of another second terminal 103 instead of directly connecting to the network device 101. The communication via relay can expand a coverage range of wireless networks, eliminate or reduce communication blind spots, and achieve higher link capacity. The terminal that is not connected to the network device is called as a remote terminal, and the terminal that provides relay function is called as a relay terminal. Direct connection between the terminal and the network device is called as a direct link, and a connection between the terminal and the network device via the relay terminal is called as an indirect link. The remote terminal and the relay terminal communicate via sidelink unicast.

In order to improve a transmission rate and reliability, the remote terminal (i. e., the first terminal 102) may maintain a connection with the network device via both the direct link and the indirect link. This function is called as multipath connection. In a case where the remote terminal is connected to the network device via the direct link, the network device may add an indirect link for the remote terminal, to realize the multipath connection.

It should be noted that the remote terminal shall be in a connected state to support the multipath connection, and cells connected by the direct link and the indirect link can only belong to the same network device.

It is understandable that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

In an embodiment of the present disclosure, a method for adding an indirect link is provided. The method may be performed independently or in combination with other embodiments described below in the present disclosure.

At step 001, second indication information is sent to a network device in response to determining a failure to add an indirect link, and the second indication information indicates the failure to add the indirect link, the indirect link is a link between a first terminal and the network device connected via a second terminal.

In an example, the second terminal may serve as a relay terminal capable of forwarding data and signaling between the first terminal and the network device.

In an embodiment of the present disclosure, in a case where the first terminal determines the failure to add the indirect link, the first terminal can report this situation to the network device and send second indication information to the network device, and the second indication information indicates the failure to add the indirect link.

In an embodiment of the present disclosure, the second indication information may be sent to the network device via a direct link connected between the first terminal and the network device.

In some implementations, the first terminal may also determine at least one candidate second terminal, that is, determine at least one candidate relay terminal, and can carry an identifier of the at least one candidate second terminal in the second indication information sent to the network device after determining the failure to add the indirect link.

In an example, a channel measurement result of the at least one candidate second terminal is higher than a first threshold value.

In an example, the first threshold value may be pre-defined by a protocol or indicated by the network device. The network device may indicate the first threshold value to the first terminal in an explicit or implicit manner (for example, the threshold value itself may be sent, or the threshold value may be indicated by indication information, etc.). The embodiments of the present disclosure do not specifically limit a manner in which the first terminal determines the first threshold value.

In an example, the second indication information also includes a channel measurement result of the at least one candidate second terminal.

In an embodiment of the present disclosure, in an example, the channel measurement result can be a SL-RSRP (sidelink-reference signal receiving rower), or may be a SD-RSRP (sidelink discovery signal-reference signal receiving rower), or may be both the SL-RSRP and the SD-RSRP.

In an example, the second indication information may also include an identifier of a serving cell of the at least one candidate second terminal.

In an embodiment of the present disclosure, a first terminal may receive first indication information sent by a network device, and the first indication information indicates the first terminal to add the indirect link, and the first indication information includes an identifier of a target second terminal. The first terminal may add, based on the first indication information, the indirect link connected to the network device via the target second terminal.

In summary, the first terminal may send the second indication information to the network device in response to determining the failure to add the indirect link, and the second indication information indicates the failure to add the indirect link. Therefore, in a scenario where the network adds an indirect link for a remote terminal, the remote terminal may determine the failure to add the indirect link, and may promptly report a result of the failure to add the indirect link to the network, so that the network can make timely adjustments to avoid service interruption, thus effectively improving a service quality, a transmission rate and transmission reliability.

In order to implement the method for adding an indirect link provided in the above embodiments, another embodiment of the present disclosure further proposes a communication device, including: including a processor and a memory, where the memory is configured to store a computer program; the processor is configured to execute the computer program stored in the memory to cause the communication device to perform the method for adding an indirect link provided in the above embodiments.

In order to implement the method for adding an indirect link provided by the above embodiments, another embodiment of the present disclosure provides an apparatus for adding an indirect link, including a transceiver unit, which is configured to send second indication information to the network device in response to determining the failure to add the indirect link, the second indication information indicates the failure to add the indirect link. The indirect link refers to the link between the first terminal and the network device connected via the target second terminal.

A method and an apparatus for adding an indirect link provided by the present disclosure are described in detail below together with the accompanying drawings.

Reference is made to FIG. 2, which is a flowchart of a method for adding an indirect link according to an embodiment of the present disclosure. It should be noted that the method for adding an indirect link in an embodiment of the present disclosure is performed by a first terminal. The method may be performed independently or in combination with any other embodiment of the present disclosure. As shown in FIG. 2, the method may include the following steps.

At step 201, first indication information sent by a network device is received. The first indication information indicates the first terminal to add the indirect link, and the first indication information includes an identifier of a target second terminal.

It is understandable that in respective embodiments of the present disclosure, the indirect link in the method for adding an indirect link refers to a link that the first terminal is connected to the network device via the second terminal. The second terminal acts as a relay terminal and can forward data and signaling between the first terminal and the network device.

A direct link (also referred to as direct path) described in respective embodiments of the present disclosure refers to a link that the first terminal is directly connected to the network device, that is, the data and signaling communicated between the first terminal and the network device are not forwarded by the relay terminal.

In embodiments of the present disclosure, in a case where the network is to add the indirect link for the first terminal, the first terminal can receive from the network device the first indication information indicating to add the indirect link. The first indication information includes the identifier of the target second terminal.

The target second terminal is also a target relay terminal, and the indirect link that the network device is to add for the first terminal is the link that the first terminal is connected to the network device via the target second terminal.

It is understandable that in some embodiments of the present disclosure, the first terminal may receive the first indication information via the direct link between the first terminal and the network device, that is, the first indication information may be communicated on the direct link between the first terminal and the network device.

After receiving the first indication information, the first terminal can add the indirect link connected to the network device via the target second terminal according to the first indication information and the identifier of the target second terminal in the first indication information.

At step 202, the indirect link connected to the network device via the target second terminal is added based on the first indication information.

In some embodiments of the present disclosure, after receiving from the network device the first indication information indicating to add the indirect link, the first terminal can add the indirect link connected to the network device via the target second terminal according to the first indication information.

In an example, the first terminal may attempt to establish a sidelink connection with the target second terminal according to the identifier of the target second terminal in the first indication information, and add the indirect link connected to the network device via the target second terminal.

In an example, the first terminal and the second terminal may discover each other through a discovery procedure.

At step 203, second indication information is sent to the network device in response to determining a failure to add the indirect link, the second indication information indicates the failure to add the indirect link.

In some embodiments of the present disclosure, in a case where the first terminal decides the failure to add the indirect link, the first terminal can report this situation to the network device and send the second indication information to the network device. The second indication information indicates the failure to add the indirect link.

It is understandable that, in some embodiments of the present disclosure, the second indication information is sent to the network device via the direct link connected between the first terminal and the network device.

In some implementations, the first terminal can also determine at least one candidate second terminal, that is, determine at least one candidate relay terminal, and can carry an identifier of the at least one candidate second terminal in the second indication information sent to the network device after determining the failure to add the indirect link.

In an example, a channel measurement result of the at least one candidate second terminal is higher than a first threshold value.

In an example, the first threshold value may be pre-defined by the protocol or indicated by the network device. The network device may indicate the first threshold value to the first terminal in an explicit or implicit manner (for example, the threshold value itself may be sent, or the threshold value may be indicated by indication information, etc.). The embodiments of the present disclosure do not specifically limit a manner in which the first terminal determines the first threshold value.

In an example, the second indication information further includes a channel measurement result of the at least one candidate second terminal.

In some embodiments of the present disclosure, in an example, the channel measurement result may be a SL-RSRP, or a SD-RSRP, or both the SL-RSRP and the SD-RSRP.

In an example, the second indication information may further include an identifier of a serving cell for the at least one candidate second terminal.

In an embodiment of the present disclosure, the first terminal determines the failure to add the indirect link in response to any of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure *(RRCReconfigurationFailureSidelink;* RRC, radio resources control) message from the target second terminal; or
during operation of a first timer, the first terminal receiving a sidelink notification *(NotificationMessageSidelink)* message from the target second terminal.

The first timer is a timer that the first terminal can determine to start timing, stop timing, and decides expiration.

In an example, a duration of the first timer may be determined by the network device and provided to the first terminal.

Furthermore, the duration of the first timer may be included in the first indication information.

A target cell list of the first terminal refers to a list of at least one serving cell connected to the indirect link added by the network device for the first terminal.

In an example, the target cell list may be included in the first indication information.

As an example, a length of the target cell list may be 1 (i.e., the list includes only one target cell). It is understandable that the length of the target cell list may also be other values, which are not limited in the present disclosure.

The sidelink notification *(NotificationMessageSidelink)* message sent by the target second terminal can be used to notify the first terminal that the target second terminal has at least one of the following situations: radio link failure, handover, cell reselection, RRC connection failure. The RRC connection failure includes at least one of: receiving an RRC connection rejection message, an expiration of a T300 timer, a RRC recovery failure.

The sidelink notification message may carry an indication type that can indicate an event occurred in the target second terminal. As an example, an indication type corresponding to the radio link failure is *relayUE-UuRLF,* an indication type corresponding to the handover is *relayUE-HO,* an indication type corresponding to the cell reselection is *relayUE-CellReselection,* and an indication type corresponding to the RRC connection failure is *relayUE-UuRRCFailure.*

In an embodiment of the present disclosure, the first terminal can determine that the serving cell for the target second terminal changes in response to a current serving cell for the target second terminal being different from a serving cell for the target second terminal before the indirect link is added.

It is understandable that if the change of the serving cell of the target second terminal occurs after the target second terminal establishes a sidelink connection with the first terminal, the target second terminal may send the sidelink notification message to the first terminal.

In an embodiment of the present disclosure, the first timer starts in response to any one or more of the following events:
the first terminal receiving the first indication information from the network device;
the first terminal sending a sidelink radio resource control reconfiguration *(RRCReconfigurationSidelink)* message to the target second terminal;
the first terminal sending a radio resource control reconfiguration completion *(RRCReconfigurationComplete)* message to the target second terminal; or
the first terminal sending a specific radio bearer (RB) to the target second terminal.

In an example, the sidelink radio resource control reconfiguration *(RRCReconfigurationSidelink)* message sent by the first terminal to the target second terminal includes third indication information, and the third indication information may indicate an addition of the indirect link. As an example, the third indication information may be only 1 bit of information, used to indicate the addition of the indirect link. It is understandable that the third indication information may also be indicated in other explicit or implicit manner, which is not limited in the embodiments of the present disclosure.

It should be noted that the target second terminal may forward the radio resource control reconfiguration completion *(RRCReconfigurationComplete)* message sent by the first terminal to the network device.

As an example, optionally, the specific RB may be an RB carrying data or signaling sent to the network device. It is understandable that other RBs may also be selected as the specific RB according to actual conditions, which is not limited in the embodiments of the present disclosure.

In an embodiment of the present disclosure, the first timer stops in response to any one or more of the following events:
the first terminal receiving a sidelink radio resource control reconfiguration completion *(RRCReconfigurationSidelink)* message from the target second terminal;
the first terminal successfully sending a sidelink radio resource control reconfiguration (*RRCReconfigurationCompleteSidelink*) message to the target second terminal;
the first terminal receiving the sidelink radio resource control reconfiguration failure *(RRCReconfigurationFailureSidelink)* message from the target second terminal;
the first terminal receiving the sidelink notification *(NotificationMessageSidelink)* message from the target second terminal;
the first terminal successfully sending a radio resource control reconfiguration completion *(RRCReconfigurationComplete)* message to the target second terminal;
the first terminal successfully sending a specific RB to the target second terminal; or
the first terminal receiving a specific RB from the target second terminal.

It should be noted that in the sidelink communication, after two terminals establish a unicast connection, one terminal may send the *RRCReconfigurationSidelink* message to the other terminal, in which, the message carries a configuration for the other terminal, and start a T400 timer. If receiving the *RRCReconfigurationCompleteSidelink* message or the *RRCReconfigurationFailureSidelink* message replied by the other terminal, the one terminal may stop the timer. If the timer expires, the one terminal may trigger the sidelink radio link failure, and release a PC5-RRC connection between two terminals and all corresponding sidelink bearers.

It is understandable that after receiving the *RRCReconfigurationSidelink* message, if a configuration carried by the message can be suitable for the terminal, the terminal may reply with the *RRCReconfigurationCompleteSidelink* message, the configuration becomes effective, and the T400 timer stops operating. If the configuration carried by the message cannot be suitable for the terminal, the terminal may reply with the *RRCReconfigurationFailureSidelink* message, the configuration has no effect, and the T400 timer stops operating.

It is also understandable that, in an embodiment of the present disclosure, unicast communication is performed between the first terminal and the second terminal via a sidelink.

In an embodiment of the present disclosure, the first terminal determine that the *RRCReconfigurationSidelink* message is successfully sent to the target second terminal in response to receiving acknowledgment indication information indicating a successful reception of the *RRCReconfigurationSidelink* message from the target second terminal

In an example, the acknowledgment indication information may be indication information of a radio link control (RLC) protocol, or the acknowledgment indication information may be indication information of a physical sidelink feedback channel (PSFCH).

Similarly, in an embodiment of the present disclosure, the first terminal determines that the *RRCReconfigurationComplete* message is successfully sent to the target second terminal in response to receiving acknowledgment indication information indicating a successful reception of the *RRCReconfigurationComplete* message from the target second terminal.

In an example, the acknowledgment indication information may be the indication information of RLC, or the confirmation indication information may be the indication information of PSFCH.

In an embodiment of the present disclosure, the first terminal determines that the specific RB is successfully sent to the target second terminal in response to receiving acknowledgment indication information indicating a successful reception of the specific RB from the target second terminal.

In an example, the acknowledgment indication information may be the indication information of RLC, or the confirmation indication information may be the indication information of PSFCH.

In some implementations, the second indication information further indicates a cause of the failure to add the indirect link.

In an example, the cause may be any one of: an expiration of a timer, a change of a serving cell of the second terminal, the serving cell of the second terminal being absent from the target cell list, occurrence of a radio link failure in the second terminal, occurrence of a handover in the second terminal, occurrence of a cell reselection in the second terminal, or occurrence of an RRC connection failure in the second terminal. The occurrence of the RRC connection failure includes at least one of: receiving an RRC connection rejection message, an expiration of a T300 timer, or an RRC recovery failure.

It is understandable that the first terminal may determine the cause of the failure to add the indirect link according to an event that triggers the failure to add the indirect link, and carry the cause in the second indication information sent to the network device.

In summary, the first indication information sent by the network device is received, the first indication information indicates the first terminal to add the indirect link, and the first indication information includes the identifier of the target second terminal, the indirect link connected to the network device via the target second terminal is added based on the first indication information. The second indication information is sent to the network device in response to determining the failure to add the indirect link, and the second indication information indicates the failure to add the indirect link. Therefore, in a scenario where the network adds an indirect link for a remote terminal, the remote terminal may determine the failure to add the indirect link, and may promptly report a result of the failure to add the indirect link to the network, so that the network can make timely adjustments to avoid service interruption, thus effectively improving a service quality, a transmission rate and transmission reliability.

Reference is made to FIG. 3, which is a flowchart of a method for adding an indirect link according to an embodiment of the present disclosure. It should be noted that the method for adding an indirect link in an embodiment of the present disclosure is performed by a first terminal. The method may be performed independently or in combination with any other embodiment of the present disclosure. As shown in FIG. 3, the method may include the following steps.

At step 301, first indication information sent by a network device is received. The first indication information indicates the first terminal to add the indirect link, and the first indication information includes an identifier of a target second terminal.

In embodiments of the present disclosure, in a case where the network is to add the indirect link for the first terminal, the first terminal can receive from the network device the first indication information indicating to add the indirect link. The first indication information includes the identifier of the target second terminal.

The target second terminal is also a target relay terminal, and the indirect link that the network device is to add for the first terminal is the link that the first terminal is connected to the network device via the target second terminal.

It is understandable that in some embodiments of the present disclosure, the first terminal may receive the first indication information via the direct link between the first terminal and the network device, that is, the first indication information may be communicated on the direct link between the first terminal and the network device.

After receiving the first indication information, the first terminal can add the indirect link connected to the network device via the target second terminal according to the first indication information and the identifier of the target second terminal in the first indication information.

At step 302, the indirect link connected to the network device via the target second terminal is added based on the first indication information.

In some embodiments of the present disclosure, after receiving from the network device the first indication information indicating to add the indirect link, the first terminal can add the indirect link connected to the network device via the target second terminal according to the first indication information.

In an example, the first terminal may attempt to establish a sidelink connection with the target second terminal according to the identifier of the target second terminal in the first indication information, and add the indirect link connected to the network device via the target second terminal.

In an example, the first terminal and the second terminal may discover each other through a discovery procedure.

At step 303, second indication information is sent to the network device in response to determining a failure to add the indirect link, the second indication information indicates the failure to add the indirect link.

In an embodiment of the present disclosure, the first terminal determines the failure to add the indirect link in response to any of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure *(RRCReconfigurationFailureSidelink)* message from the target second terminal; or
during operation of a first timer, the first terminal receiving a sidelink notification *(NotificationMessageSidelink)* message from the target second terminal.

The first timer is a timer that the first terminal can determine to start timing, stop timing, and decides expiration.

In an example, a duration of the first timer may be determined by the network device and provided to the first terminal.

Furthermore, the duration of the first timer may be included in the first indication information.

A target cell list of the first terminal refers to a list of at least one serving cell connected to the indirect link added by the network device for the first terminal.

In an example, the target cell list may be included in the first indication information.

As an example, a length of the target cell list may be 1 (i.e., the list includes only one target cell). It is understandable that the length of the target cell list may also be other values, which are not limited in the present disclosure.

The sidelink notification *(NotificationMessageSidelink)* message sent by the target second terminal can be used to notify the first terminal that the target second terminal has at least one of the following situations: radio link failure, handover, cell reselection, RRC connection failure. The RRC connection failure includes at least one of: receiving an RRC connection rejection message, an expiration of a T300 timer, a RRC recovery failure.

The sidelink notification message may carry an indication type that can indicate an event occurred in the target second terminal. As an example, an indication type corresponding to the radio link failure is *relayUE-UuRLF,* an indication type corresponding to the handover is *relayUE-HO,* an indication type corresponding to the cell reselection is *relayUE-CellReselection,* and an indication type corresponding to the RRC connection failure is *relayUE-UuRRCFailure.*

In an embodiment of the present disclosure, the first terminal can determine that the serving cell for the target second terminal changes in response to a current serving cell for the target second terminal being different from a serving cell for the target second terminal before the indirect link is added.

It is understandable that if the change of the serving cell of the target second terminal occurs after the target second terminal establishes a sidelink connection with the first terminal, the target second terminal may send the sidelink notification message to the first terminal.

In an embodiment of the present disclosure, the first timer starts in response to any one or more of the following events:
the first terminal receiving the first indication information from the network device;
the first terminal sending a sidelink radio resource control reconfiguration *(RRCReconfigurationSidelink)* message to the target second terminal;
the first terminal sending a radio resource control reconfiguration completion *(RRCReconfigurationComplete)* message to the target second terminal; or
the first terminal sending a specific RB to the target second terminal.

In an example, the sidelink radio resource control reconfiguration *(RRCReconfigurationSidelink)* message sent by the first terminal to the target second terminal includes third indication information, and the third indication information may indicate an addition of the indirect link. As an example, the third indication information may be only 1 bit of information, used to indicate the addition of the indirect link. It is understandable that the third indication information may also be indicated in other explicit or implicit manner, which is not limited in embodiments of the present disclosure.

It should be noted that the target second terminal may forward the radio resource control reconfiguration completion *(RRCReconfigurationComplete)* message sent by the first terminal to the network device.

As an example, optionally, the specific RB may be an RB carrying data or signaling sent to the network device. It is understandable that other RBs may also be selected as the specific RB according to actual conditions, which is not limited in embodiments of the present disclosure.

In an embodiment of the present disclosure, the first timer stops in response to any one or more of the following events:
the first terminal receiving a sidelink radio resource control reconfiguration completion *(RRCReconfigurationSidelink)* message from the target second terminal;
the first terminal successfully sending a sidelink radio resource control reconfiguration (*RRCReconfigurationCompleteSidelink*) message to the target second terminal;
the first terminal receiving the sidelink radio resource control reconfiguration failure *(RRCReconfigurationFailureSidelink)* message from the target second terminal;
the first terminal receiving the sidelink notification *(NotificationMessageSidelink)* message from the target second terminal;
the first terminal successfully sending a radio resource control reconfiguration completion (*RRCReconfigurationComplete*) message to the target second terminal;
the first terminal successfully sending a specific RB to the target second terminal; or
the first terminal receiving a specific RB from the target second terminal.

Similarly, as an example, the specific RB can be an RB carrying data or signaling sent to the network device. It is understandable that other RBs may also be selected as the specific RB according to actual situations, which is not limited in an embodiment of the present disclosure.

In an embodiment of the present disclosure, the first terminal determine that the *RRCReconfigurationSidelink* message is successfully sent to the target second terminal in response to receiving acknowledgment indication information indicating a successful reception of the *RRCReconfigurationSidelink* message from the target second terminal

In an example, the acknowledgment indication information may be indication information of a RLC protocol, or the acknowledgment indication information may be indication information of a PSFCH.

Similarly, in an embodiment of the present disclosure, the first terminal determines that the *RRCReconfigurationComplete* message is successfully sent to the target second terminal in response to receiving acknowledgment indication information indicating a successful reception of the *RRCReconfigurationComplete* message from the target second terminal.

In an example, the acknowledgment indication information may be the indication information of RLC, or the confirmation indication information may be the indication information of PSFCH.

In an embodiment of the present disclosure, the first terminal determines that the specific RB is successfully sent to the target second terminal in response to receiving acknowledgment indication information indicating a successful reception of the specific RB from the target second terminal.

In an example, the acknowledgment indication information may be the indication information of RLC, or the confirmation indication information may be the indication information of PSFCH.

In some implementations, the second indication information further indicates a cause of the failure to add the indirect link.

In an example, the cause may be any one of: an expiration of a timer, a change of a serving cell of the second terminal, the serving cell of the second terminal being absent from the target cell list, occurrence of a radio link failure in the second terminal, occurrence of a handover in the second terminal, occurrence of a cell reselection in the second terminal, or occurrence of an RRC connection failure in the second terminal. The occurrence of the RRC connection failure includes at least one of: receiving an RRC connection rejection message, an expiration of a T300 timer, or an RRC recovery failure.

It is understandable that the first terminal may determine the cause of the failure to add the indirect link according to an event that triggers the failure to add the indirect link, and carry the cause in the second indication information sent to the network device.

At step 304, at least one candidate second terminal is determined, the second indication information includes an identifier of the at least one candidate second terminal.

In some implementations, the first terminal can also determine at least one candidate second terminal, that is, determine at least one candidate relay terminal, and can carry an identifier of the at least one candidate second terminal in the second indication information sent to the network device after determining the failure to add the indirect link.

In an example, a channel measurement result of the at least one candidate second terminal is higher than a first threshold value. The first terminal may determine the at least one candidate second terminal based on the channel measurement result.

In an example, the first threshold value may be pre-defined by the protocol or indicated by the network device. The network device may indicate the first threshold value to the first terminal in an explicit or implicit manner (for example, the threshold value itself may be sent, or the threshold value may be indicated by indication information, etc.). The embodiments of the present disclosure do not specifically limit a manner in which the first terminal determines the first threshold value.

In an example, the second indication information further includes a channel measurement result of the at least one candidate second terminal.

In some embodiments of the present disclosure, in an example, the channel measurement result may be a SL-RSRP, or a SD-RSRP, or both the SL-RSRP and the SD-RSRP.

In an example, the second indication information may further include an identifier of a serving cell for the at least one candidate second terminal.

In summary, the first indication information sent by the network device is received, the first indication information indicates the first terminal to add the indirect link, and the first indication information includes the identifier of the target second terminal, the indirect link connected to the network device via the target second terminal is added based on the first indication information. The second indication information is sent to the network device in response to determining the failure to add the indirect link, and the second indication information indicates the failure to add the indirect link. The at least one candidate second terminal may be determined, and the second indication information includes the identifier of the at least one candidate second terminal. Therefore, in a scenario where the network adds an indirect link for a remote terminal, the remote terminal may determine the failure to add the indirect link, and may promptly report a result of the failure to add the indirect link to the network, and may provide a new candidate relay to enable the network to select a new relay terminal more quickly, thus avoiding service interruption, effectively improving a service quality, a transmission rate and transmission reliability.

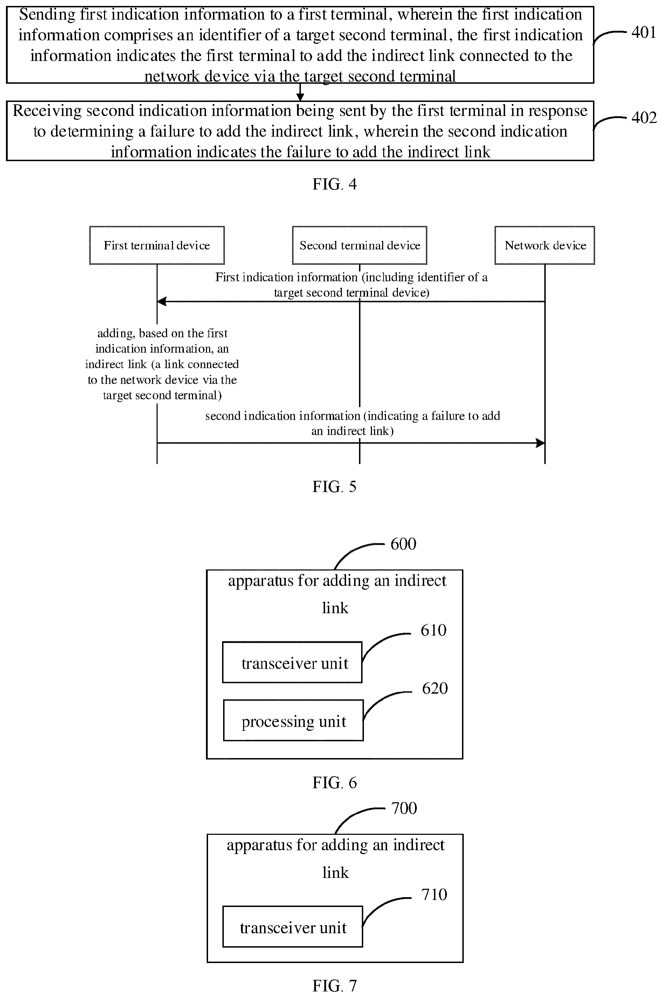

Reference is made to FIG. 4, which is a flowchart of a method for adding an indirect link according to an embodiment of the present disclosure. It should be noted that the method for adding an indirect link in an embodiment of the present disclosure is performed by a network device. The method may be performed independently or in combination with any other embodiment of the present disclosure. As shown in FIG. 4, the method may include the following steps.

At step 401, first indication information is sent to a first terminal, in which, the first indication information includes an identifier of a target second terminal, the first indication information indicates the first terminal to add the indirect link connected to the network device via the target second terminal.

It is understandable that in respective embodiments of the present disclosure, the indirect link in the method for adding an indirect link refers to a link that the first terminal is connected to the network device via the second terminal. The second terminal acts as a relay terminal and can forward data and signaling between the first terminal and the network device.

A direct link (also referred to as direct path) described in respective embodiments of the present disclosure refers to a link that the first terminal is directly connected to the network device, that is, the data and signaling communicated between the first terminal and the network device are not forwarded by the relay terminal.

In embodiments of the present disclosure, in a case where the network is to add the indirect link for the first terminal, the network device can send to the first terminal the first indication information indicating to add the indirect link. The first indication information includes the identifier of the target second terminal.

The target second terminal is also a target relay terminal, and the indirect link that the network device is to add for the first terminal is the link that the first terminal is connected to the network device via the target second terminal.

It is understandable that in some embodiments of the present disclosure, the network device may send the first indication information via the direct link between the first terminal and the network device, that is, the first indication information may be communicated on the direct link between the first terminal and the network device.

After receiving the first indication information, the first terminal can add the indirect link connected to the network device via the target second terminal according to the first indication information and the identifier of the target second terminal in the first indication information.

The first terminal may attempt to establish a sidelink connection with the target second terminal according to the identifier of the target second terminal in the first indication information, and add the indirect link connected to the network device via the target second terminal.

The first terminal and the second terminal may discover each other through a discovery procedure.

At step 402, second indication information being sent by the first terminal in response to determining a failure to add the indirect link is received. The second indication information indicates the failure to add the indirect link.

In some embodiments of the present disclosure, in a case where the first terminal decides the failure to add the indirect link, the first terminal can report this situation to the network device. The network device can receive the second indication information sent by the first terminal. The second indication information indicates the failure to add the indirect link.

It is understandable that, in some embodiments of the present disclosure, the second indication information is sent to the network device via the direct link connected between the first terminal and the network device.

In some implementations, the second indication information includes an identifier of at least one candidate second terminal. The at least one candidate second terminal is determined by the first terminal. That is, the first terminal can determine at least one candidate relay terminal, and can carry an identifier of the at least one candidate second terminal in the second indication information sent to the network device after determining the failure to add the indirect link.

In an example, a channel measurement result of the at least one candidate second terminal is higher than a first threshold value.

In an example, the first threshold value may be pre-defined by the protocol or indicated by the network device. The network device may indicate the first threshold value to the first terminal in an explicit or implicit manner (for example, the threshold value itself may be sent, or the threshold value may be indicated by indication information, etc.). The embodiments of the present disclosure do not specifically limit a manner in which the first terminal determines the first threshold value.

In an example, the second indication information further includes a channel measurement result of the at least one candidate second terminal.

In some embodiments of the present disclosure, in an example, the channel measurement result may be a SL-RSRP, or a SD-RSRP, or both the SL-RSRP and the SD-RSRP.

In an example, the second indication information may further include an identifier of a serving cell for the at least one candidate second terminal.

In an embodiment of the present disclosure, the failure to add the indirect link is determined in response to any of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure *(RRCReconfigurationFailureSidelink)* message from the target second terminal; or
during operation of a first timer, the first terminal receiving a sidelink notification *(NotificationMessageSidelink)* message from the target second terminal.

The first timer is a timer that the first terminal can determine to start timing, stop timing, and decides expiration.

In an example, a duration of the first timer may be determined by the network device and provided to the first terminal.

Furthermore, the duration of the first timer may be included in the first indication information.

A target cell list of the first terminal refers to a list of at least one serving cell connected to the indirect link added by the network device for the first terminal.

In an example, the target cell list may be included in the first indication information.

As an example, a length of the target cell list may be 1 (i.e., the list includes only one target cell). It is understandable that the length of the target cell list may also be other values, which are not limited in the present disclosure.

The sidelink notification *(NotificationMessageSidelink)* message sent by the target second terminal can be used to notify the first terminal that the target second terminal has at least one of the following situations: radio link failure, handover, cell reselection, RRC connection failure. The RRC connection failure includes at least one of: receiving an RRC connection rejection message, an expiration of a T300 timer, a RRC recovery failure.

The sidelink notification message may carry an indication type that can indicate an event occurred in the target second terminal. As an example, an indication type corresponding to the radio link failure is *relayUE-UuRLF,* an indication type corresponding to the handover is *relayUE-HO,* an indication type corresponding to the cell reselection is *relayUE-CellReselection,* and an indication type corresponding to the RRC connection failure is *relayUE-UuRRCFailure.*

In an embodiment of the present disclosure, the first terminal can determine that the serving cell for the target second terminal changes in response to a current serving cell for the target second terminal being different from a serving cell for the target second terminal before the indirect link is added.

It is understandable that if the change of the serving cell for the target second terminal occurs after the target second terminal establishes a sidelink connection with the first terminal, the target second terminal may send the sidelink notification message to the first terminal.

In an embodiment of the present disclosure, the first timer starts in response to any one or more of the following events:
the first terminal receiving the first indication information from the network device;
the first terminal sending a sidelink radio resource control reconfiguration *(RRCReconfigurationSidelink)* message to the target second terminal;
the first terminal sending a radio resource control reconfiguration completion (*RRCReconfigurationComplete*) message to the target second terminal; or
the first terminal sending a specific RB to the target second terminal.

In an example, the sidelink radio resource control reconfiguration *(RRCReconfigurationSidelink)* message sent by the first terminal to the target second terminal includes third indication information, and the third indication information may indicate an addition of the indirect link. As an example, the third indication information may be only 1 bit of information, used to indicate the addition of the indirect link. It is understandable that the third indication information may also be indicated in other explicit or implicit manner, which is not limited in embodiments of the present disclosure.

It should be noted that the target second terminal may forward the radio resource control reconfiguration completion *(RRCReconfigurationComplete)* message sent by the first terminal to the network device.

As an example, optionally, the specific RB may be an RB carrying data or signaling sent to the network device. It is understandable that other RBs may also be selected as the specific RB according to actual conditions, which is not limited in embodiments of the present disclosure.

In an embodiment of the present disclosure, the first timer stops in response to any one or more of the following events:
the first terminal receiving a sidelink radio resource control reconfiguration completion *(RRCReconfigurationSidelink)* message from the target second terminal;
the first terminal successfully sending a sidelink radio resource control reconfiguration (*RRCReconfigurationCompleteSidelink*) message to the target second terminal;
the first terminal receiving the sidelink radio resource control reconfiguration failure *(RRCReconfigurationFailureSidelink)* message from the target second terminal;
the first terminal receiving the sidelink notification *(NotificationMessageSidelink)* message from the target second terminal;
the first terminal successfully sending a radio resource control reconfiguration completion *(RRCReconfigurationComplete)* message to the target second terminal;
the first terminal successfully sending a specific RB to the target second terminal; or
the first terminal receiving a specific RB from the target second terminal.

It should be noted that in the sidelink communication, after two terminals establish a unicast connection, one terminal may send the *RRCReconfigurationSidelink* message to the other terminal, in which, the message carries a configuration for the other terminal, and start a T400 timer. If receiving the *RRCReconfigurationCompleteSidelink* message or the *RRCReconfigurationFailureSidelink* message replied by the other terminal, the one terminal may stop the timer. If the timer expires, the one terminal may trigger the sidelink radio link failure, and release a PC5-RRC connection between two terminals and all corresponding sidelink bearers.

It is understandable that after receiving the *RRCReconfigurationSidelink* message, if a configuration carried by the message can be suitable for the terminal, the terminal may reply with the *RRCReconfigurationCompleteSidelink* message, the configuration becomes effective, and the T400 timer stops operating. If the configuration carried by the message cannot be suitable for the terminal, the terminal may reply with the *RRCReconfigurationFailureSidelink* message, the configuration has no effect, and the T400 timer stops operating.

It is also understandable that, in an embodiment of the present disclosure, unicast communication is performed between the first terminal and the second terminal via a sidelink.

In some implementations, the second indication information further indicates a cause of the failure to add the indirect link.

In an example, the cause may be any one of: an expiration of a timer, a change of a serving cell for the second terminal, the serving cell for the second terminal being absent from the target cell list, occurrence of a radio link failure in the second terminal, occurrence of a handover in the second terminal, occurrence of a cell reselection in the second terminal, or occurrence of an RRC connection failure in the second terminal. The occurrence of the RRC connection failure includes at least one of: receiving an RRC connection rejection message, an expiration of a T300 timer, or an RRC recovery failure.

It is understandable that the first terminal may determine the cause of the failure to add the indirect link according to an event that triggers the failure to add the indirect link, and carry the cause in the second indication information sent to the network device. After receiving the second indication information, the network device may determine the cause of the failure to add the indirect link, to adjust and add a new indirect link timely, which can improve a success rate.

In summary, the first indication information is sent to the first terminal, the first indication information includes the identifier of the target second terminal, and the first indication information indicates the first terminal to add the indirect link connected to the network device via the target second terminal. The second indication information sent by the first terminal is received, and the second indication information indicates the failure to add the indirect link. Therefore, in a scenario where the network adds an indirect link for a remote terminal, the remote terminal may determine the failure to add the indirect link, and may promptly report a result of the failure to add the indirect link to the network, so that the network can make timely adjustments to avoid service interruption, thus effectively improving a service quality, a transmission rate and transmission reliability.

Reference is made to FIG. 5, which is a flowchart of a method for adding an indirect link according to an embodiment of the present disclosure. The method may be performed independently or in combination with any other embodiment of the present disclosure. As shown in FIG. 5, the method may include the following steps.
1. A network device sends first indication information to a first terminal, the first indication information includes an identifier of a target second terminal. The first indication information indicates the first terminal to add the indirect link connected to the network device via the target second terminal.

In embodiments of the present disclosure, the first indication information may communicated via a direct link between the first terminal and the network device.
2. The first terminal adds the indirect link (a link connected to the network device via the target second terminal) based on the first indication information.
3. The first terminal sends second indication information to the network device in response to determining a failure to add the indirect link. The second indication information indicates the failure to add the indirect link.

In embodiments of the present disclosure, the second indication information may be communicated via a direct link between the first terminal and the network device.

The failure to add the indirect link can be triggered in response to presence of any of the following conditions:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure (RRCReconfigurationFailureSidelink) message from the target second terminal; or
during operation of a first timer, the first terminal receiving a sidelink notification *(NotificationMessageSidelink)* message from the target second terminal.

Corresponding to the method for adding an indirect link provided in the embodiments described above, the disclosure also provides an apparatus for adding an indirect link. Since the apparatus for adding an indirect link provided in embodiments of the disclosure corresponds to the methods provided in the embodiments described above, the implementation of the method for adding an indirect link is also applicable to the apparatus for adding an indirect link provided in the following embodiments, which will not be described in detail in the following embodiments.

Referring to FIG. 6, FIG. 6 is a structural block diagram illustrating an apparatus for adding an indirect link provided in embodiments of the disclosure.

As shown in FIG. 6, the apparatus 600 for adding an indirect link includes: a transceiver unit 610 and a processing unit 620.

The transceiver unit 610 is configured to receive first indication information sent by a network device, wherein the first indication information indicates the first terminal to add the indirect link, and the first indication information comprises an identifier of a target second terminal.

The processing unit 620 is configured to add, based on the first indication information, the indirect link connected to the network device via the target second terminal.

The transceiver unit 610 is further configured to send second indication information to the network device in response to determining a failure to add the indirect link, wherein the second indication information indicates the failure to add the indirect link.

In an example, the processing unit 620 is further configured to that:
the first terminal determines the failure to add the indirect link in response to any of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure message from the target second terminal; or
during operation of a first timer, the first terminal receiving a sidelink notification message from the target second terminal.

In an example, the first timer starts in response to any one or more of the following events:
the first terminal receiving the first indication information from the network device;
the first terminal sending a sidelink radio resource control reconfiguration message to the target second terminal;
the first terminal sending a radio resource control reconfiguration completion message to the target second terminal; or
the first terminal sending a specific radio bearer (RB) to the target second terminal.

In an example, the first timer stops in response to any one or more of the following events:
the first terminal receiving a sidelink radio resource control reconfiguration completion message from the target second terminal;
the first terminal successfully sending a sidelink radio resource control reconfiguration message to the target second terminal;
the first terminal receiving the sidelink radio resource control reconfiguration failure message from the target second terminal;
the first terminal receiving the sidelink notification message from the target second terminal;
the first terminal successfully sending a radio resource control reconfiguration completion message to the target second terminal;
the first terminal successfully sending a specific RB to the target second terminal; or
the first terminal receiving a specific RB from the target second terminal.

In an example, the sidelink radio resource control reconfiguration message sent by the first terminal to the target second terminal comprises third indication information, and the third indication information indicates an addition of the indirect link.

In an example, the processing unit 620 is further configured to:
determine that the first terminal successfully sends the sidelink radio resource control reconfiguration message to the target second terminal in response to receiving acknowledgment indication information indicating a successful reception of the sidelink radio resource control reconfiguration message from the target second terminal.

In an example, the processing unit 620 is further configured to:
determine that the first terminal successfully sends the radio resource control reconfiguration completion message to the target second terminal in response to receiving acknowledgment indication information indicating a successful reception of the radio resource control reconfiguration completion message from the target second terminal.

In an example, the processing unit 620 is further configured to:
determine that the first terminal successfully sends the specific RB to the target second terminal in response to receiving acknowledgment indication information indicating a successful reception of the specific RB from the target second terminal.

In an example, a duration of the first timer is comprised in the first indication information.

In an example, the processing unit 620 is further configured to:
determine that the serving cell for the target second terminal changes in response to a current serving cell for the target second terminal being different from a serving cell for the target second terminal before the indirect link is added.

In an example, the target cell list is comprised in the first indication information.

In an example, the second indication information further indicates a cause of the failure to add the indirect link.

In an example, the processing unit 620 is further configured to:
determine at least one candidate second terminal;
in which, the second indication information includes an identifier of the at least one candidate second terminal.

In an example, a channel measurement result of the at least one candidate second terminal is higher than a first threshold value.

In an example, the first threshold value is indicated by the network device, or the first threshold value is pre-defined.

In an example, the second indication information further comprises a channel measurement result of the at least one candidate second terminal.

In an example, the channel measurement result is a SL-RSRP and/or a SD-RSRP.

In an example, the second indication information further comprises an identifier of a serving cell for the at least one candidate second terminal.

In an example, the second indication information is transmitted via a direct link between the first terminal and the network device.

According to the apparatus for adding an indirect link provided in an embodiment, the first indication information sent by the network device is received, the first indication information indicates the first terminal to add the indirect link, and the first indication information includes the identifier of the target second terminal, the indirect link connected to the network device via the target second terminal is added based on the first indication information. The second indication information is sent to the network device in response to determining the failure to add the indirect link, and the second indication information indicates the failure to add the indirect link. Therefore, in a scenario where the network adds an indirect link for a remote terminal, the remote terminal may determine the failure to add the indirect link, and may promptly report a result of the failure to add the indirect link to the network, so that the network can make timely adjustments to avoid service interruption, thus effectively improving a service quality, a transmission rate and transmission reliability.

Referring to FIG. 7, FIG. 7 is a structural block diagram illustrating an apparatus for adding an indirect link provided in embodiments of the disclosure.

As shown in FIG. 7, the apparatus 700 for adding an indirect link includes: a transceiver unit 710.

The transceiver unit 710 is configured to, send first indication information to a first terminal, wherein the first indication information comprises an identifier of a target second terminal, the first indication information indicates the first terminal to add the indirect link connected to the network device via the target second terminal; and

The transceiver unit 710 is further configured to, receive second indication information being sent by the first terminal in response to determining a failure to add the indirect link, wherein the second indication information indicates the failure to add the indirect link.

In an example, the failure to add the indirect link is determined in response to any one of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure message from the target second terminal; or
during operation of a first timer, the first terminal receiving a sidelink notification message from the target second terminal.

In an example, the first timer starts in response to any one or more of the following events:
the first terminal receiving the first indication information from the network device;
the first terminal sending a sidelink radio resource control reconfiguration message to the target second terminal;
the first terminal sending a radio resource control reconfiguration completion message to the target second terminal; or
the first terminal sending a specific radio bearer (RB) to the target second terminal.

In an example, the first timer stops in response to any one or more of the following events:
the first terminal receiving a sidelink radio resource control reconfiguration completion message from the target second terminal;
the first terminal successfully sending a sidelink radio resource control reconfiguration message to the target second terminal;
the first terminal receiving the sidelink radio resource control reconfiguration failure message from the target second terminal;
the first terminal receiving the sidelink notification message from the target second terminal;
the first terminal successfully sending a radio resource control reconfiguration completion message to the target second terminal;
the first terminal successfully sending a specific RB to the target second terminal; or
the first terminal receiving a specific RB from the target second terminal.

In an example, the sidelink radio resource control reconfiguration message sent by the first terminal to the target second terminal comprises third indication information, and the third indication information indicates an addition of the indirect link.

In an example, a duration of the first timer is comprised in the first indication information.

In an example, the target cell list is comprised in the first indication information.

In an example, the second indication information further indicates a cause of the failure to add the indirect link.

In an example, the second indication information comprises an identifier of at least one candidate second terminal.

In an example, a channel measurement result of the at least one candidate second terminal is higher than a first threshold value.

In an example, the first threshold value is indicated by the network device, or the first threshold value is pre-defined.

In an example, the second indication information further comprises a channel measurement result of the at least one candidate second terminal.

In an example, the channel measurement result is a SL-RSRP and/or a SD-RSRP.

In an example, the second indication information further comprises an identifier of a serving cell for the at least one candidate second terminal.

In an example, the second indication information is transmitted via a direct link between the first terminal and the network device.

According to the apparatus for adding an indirect link provided in an embodiment, the first indication information is sent to the first terminal, the first indication information includes the identifier of the target second terminal, and the first indication information indicates the first terminal to add the indirect link connected to the network device via the target second terminal. The second indication information sent by the first terminal is received, and the second indication information indicates the failure to add the indirect link. Therefore, in a scenario where the network adds an indirect link for a remote terminal, the remote terminal may determine the failure to add the indirect link, and may promptly report a result of the failure to add the indirect link to the network, so that the network can make timely adjustments to avoid service interruption, thus effectively improving a service quality, a transmission rate and transmission reliability.

In order to implement the above embodiments, embodiments of the disclosure further provide a communication device. The communication device includes a processor and a memory. The memory is stored with a computer program; and the processor executes the computer program stored in the memory, causing the communication device to perform the method illustrated in the embodiments of FIG. 2 to FIG. 3, or to perform the method illustrated in the embodiments of FIG. 5.

In order to implement the above embodiments, embodiments of the disclosure further provide a communication device. The communication device includes a processor and a memory. The memory is stored with a computer program; and the processor executes the computer program stored in the memory, causing the communication device to perform the method illustrated in the embodiments of FIG. 4.

In order to implement the above embodiments, embodiments of the disclosure further provide a communication device. The communication device includes a processor and an interface circuit. The interface circuit is configured to receive code instructions and transmit the code instructions to the processor; and the processor is configured to run the code instructions to enable the device to perform the method illustrated in the embodiments of FIG. 2 to FIG. 3, or to perform the method illustrated in the embodiments of FIG. 5.

In order to implement the above embodiments, embodiments of the disclosure further provide a communication device. The communication device includes a processor and an interface circuit. The interface circuit is configured to receive code instructions and transmit the code instructions to the processor; and the processor is configured to run the code instructions to enable the device to perform the method illustrated in the embodiments of FIG. 4.

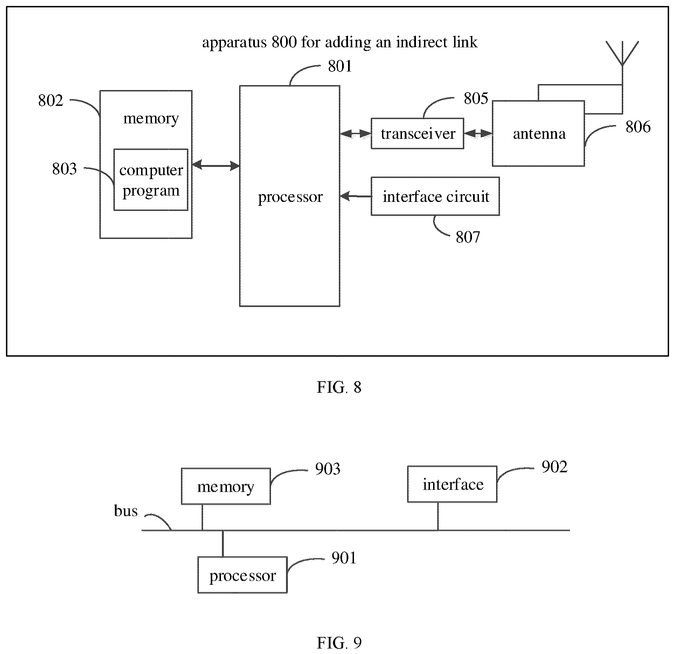

Referring to FIG. 8, it is a structural block diagram illustrating another apparatus for adding an indirect link provided in embodiments of the disclosure. The apparatus 800 may be a network device, a terminal, or a chip, a system on chip or a processor that supports the network device to implement the method, or a chip, a system on chip or a processor that supports the terminal to implement the method. The device may be configured to implement the method described in the method embodiments, and for details reference may be made to the descriptions in the method embodiments.

The apparatus 800 may include one or more processors 801. The processor 801 may include a general purpose processor or a dedicated processor. For example, the processor 801 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Alternately, the apparatus 800 may further include one or more memories 802 with a computer program 803 stored thereon. The memory 802 executes the computer program 803 so that the apparatus 800 performs the method as described in the above method embodiments. The computer program 803 may be solidified in the processor 801, in which case the processor 801 may be implemented by hardware.

Alternately, the memory 802 may further store data. The apparatus 800 and the memory 802 may be independently configured or integrated together.

Alternately, the apparatus 800 may further include a transceiver 805 and an antenna 806. The transceiver 805 may be referred to as a transceiving unit, a transceiver or a transceiving circuit, which may be configured to achieve a transceiving function. The transceiver 805 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Alternately, the apparatus 800 may further include one or more interface circuits 807. The interface circuit 807 is configured to receive code instructions and transmit the code instructions to the processor 801. The processor 801 runs the code instructions to enable the apparatus 800 to perform the method according to the above method embodiment.

In an implementation, the processor 801 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the apparatus 800 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The apparatus for adding an indirect link described in the above embodiments may be a network device or a terminal, but the scope of the apparatus for adding an indirect link described in the present disclosure is not limited thereto, and a structure of the apparatus for adding an indirect link may not be limited by FIG. 6 and FIG. 7. The apparatus for adding an indirect link may be a stand-alone device or may be a part of a larger device. For example, the apparatus for adding an indirect link may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

In the case that the apparatus for adding an indirect link may be a chip or a system on chip, please refer to a diagram of a structure of a chip as illustrated in FIG. 9. The chip illustrated in FIG. 9 includes a processor 901 and an interface 902, in which the number of processors 901 may be one or more and the number of interfaces 902 may be more than one.

In the case where the chip is used to implement the functionality of a terminal in an embodiment of the present disclosure:
interface 902 for receiving code instructions and sending them to said processor.
processor 901 for running code instructions to perform a method as described in FIG. 2 to FIG. 3.

In the case where the chip is used to implement the functionality of a network device in an embodiment of the present disclosure:
the interface 902 for receiving code instructions and sending code instructions to the processor.
the processor 901 for running code instructions to perform a method for Adding an indirect link as described in FIG. 4.

Alternately, the chip further includes a memory 903, configured to save a necessary computer program and data.

Those skilled in the related art may understand that various illustrative logical blocks and steps listed in embodiments of the present disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the present disclosure.

A communication system is further provided in embodiments of the disclosure. The system includes an apparatus for adding an indirect link as a terminal and an apparatus for adding an indirect link as a network device in the above embodiments of FIG. 6 to FIG. 7, or, alternatively, the system includes the apparatus for adding an indirect link as a terminal and the apparatus for adding an indirect link as a network device in the above embodiment of FIG. 8.

A readable storage medium having instructions stored thereon is further provided in the disclosure. When the instructions are executed by a computer, steps in the any one method embodiment are implemented.

A computer program product is further provided in the disclosure. The computer program product implements functions of the any one of the above method embodiments when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

The term predetermined in this disclosure can be understood as defined, predefined, stored, prestored, prenegotiated, preconfigured, cured, or prefired.

Those ordinary skilled in the art can realize that units and algorithm steps of each example described in combination with the embodiments in the present disclosure can be implemented in electronic hardware, or a combination of computer software and electronic hardware. Whether such functions are executed in hardware or software depends on specific applications and design constraints of the technical solution. Those skilled may use different methods to implement the described functions for each specific application, but such implementation should not be considered beyond the scope of this disclosure.

Those skilled in the art can clearly understand that for convenience and conciseness of description, for specific working processes of the system, device, and unit described above reference can be made to the corresponding processes in the aforementioned method embodiments, and details will not be repeated here.

It should be understood that the various forms of processes shown above can be used to reorder, add or delete steps. For example, the steps described in the disclosure could be performed in parallel, sequentially, or in a different order, as long as the desired result of the technical solution disclosed in the invention is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for adding an indirect link, performed by a first terminal, comprising:
receiving first indication information sent by a network device, wherein the first indication information indicates the first terminal to add the indirect link, and the first indication information comprises an identifier of a target second terminal;
adding, based on the first indication information, the indirect link connected to the network device via the target second terminal; and
sending second indication information to the network device in response to determining a failure to add the indirect link, wherein the second indication information indicates the failure to add the indirect link.

2. The method according to claim 1, wherein the first terminal determines the failure to add the indirect link in response to any of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure message from the target second terminal; or
during operation of a first timer, the first terminal receiving a sidelink notification message from the target second terminal.

3. The method according to claim 2, wherein the first timer starts in response to any one or more of the following events:
the first terminal receiving the first indication information from the network device;
the first terminal sending a sidelink radio resource control reconfiguration message to the target second terminal;
the first terminal sending a radio resource control reconfiguration completion message to the target second terminal; or
the first terminal sending a specific radio bearer (RB) to the target second terminal.

4. The method according to claim 2, wherein the first timer stops in response to any one or more of the following events:
the first terminal receiving a sidelink radio resource control reconfiguration completion message from the target second terminal;
the first terminal successfully sending a sidelink radio resource control reconfiguration message to the target second terminal;
the first terminal receiving the sidelink radio resource control reconfiguration failure message from the target second terminal;
the first terminal receiving the sidelink notification message from the target second terminal;
the first terminal successfully sending a radio resource control reconfiguration completion message to the target second terminal;
the first terminal successfully sending a specific RB to the target second terminal; or
the first terminal receiving a specific RB from the target second terminal.

5. The method according to claim 3, wherein the sidelink radio resource control reconfiguration message sent by the first terminal to the target second terminal comprises third indication information, and the third indication information indicates an addition of the indirect link.

6. The method according to claim 4, further comprising:
determining that the first terminal successfully sends the sidelink radio resource control reconfiguration message to the target second terminal in response to receiving acknowledgment indication information indicating a successful reception of the sidelink radio resource control reconfiguration message from the target second terminal.

7. The method according to claim 4, further comprising:
determining that the first terminal successfully sends the radio resource control reconfiguration completion message to the target second terminal in response to receiving acknowledgment indication information indicating a successful reception of the radio resource control reconfiguration completion message from the target second terminal.

8. The method according to claim 4, further comprising:
determining that the first terminal successfully sends the specific RB to the target second terminal in response to receiving acknowledgment indication information indicating a successful reception of the specific RB from the target second terminal.

9. The method according to any one of claims 2 to 8, wherein a duration of the first timer is comprised in the first indication information.

10. The method according to claim 2, further comprising:
determining that the serving cell for the target second terminal changes in response to a current serving cell for the target second terminal being different from a serving cell for the target second terminal before the indirect link is added.

11. The method according to claim 2, wherein the target cell list is comprised in the first indication information.

12. The method according to claim 1, wherein the second indication information further indicates a cause of the failure to add the indirect link.

13. The method according to claim 1, further comprising:
determining at least one candidate second terminal;
wherein the second indication information comprises an identifier of the at least one candidate second terminal.

14. The method according to claim 13, wherein a channel measurement result of the at least one candidate second terminal is higher than a first threshold value.

15. The method according to claim 14, wherein the first threshold value is indicated by the network device, or the first threshold value is pre-defined.

16. The method according to any one of claims 13 to 15, wherein the second indication information further comprises a channel measurement result of the at least one candidate second terminal.

17. The method according to any one of claims 14 to 16, wherein the channel measurement result is a sidelink-reference signal receiving power (SL-RSRP) and/or a sidelink discovery signal-reference signal receiving power (SD-RSRP).

18. The method according to claim 13, wherein the second indication information further comprises an identifier of a serving cell for the at least one candidate second terminal.

19. The method according to any one of claims 1 to 18, wherein the second indication information is transmitted via a direct link between the first terminal and the network device.

20. A method for adding an indirect link, performed by a network device, comprising:
sending first indication information to a first terminal, wherein the first indication information comprises an identifier of a target second terminal, the first indication information indicates the first terminal to add the indirect link connected to the network device via the target second terminal; and
receiving second indication information being sent by the first terminal in response to determining a failure to add the indirect link, wherein the second indication information indicates the failure to add the indirect link.

21. The method according to claim 20, wherein the failure to add the indirect link is determined in response to any one of the following conditions being met:
an expiration of a first timer;
a change of a serving cell for the target second terminal;
a serving cell for the target second terminal being absent from a target cell list of the first terminal;
during operation of a first timer, the first terminal receiving a sidelink radio resource control reconfiguration failure message from the target second terminal; or
during operation of a first timer, the first terminal receiving a sidelink notification message from the target second terminal.

22. The method according to claim 21, wherein the first timer starts in response to any one or more of the following events:
the first terminal receiving the first indication information from the network device;
the first terminal sending a sidelink radio resource control reconfiguration message to the target second terminal;
the first terminal sending a radio resource control reconfiguration completion message to the target second terminal; or
the first terminal sending a specific radio bearer (RB) to the target second terminal.

23. The method according to claim 21, wherein the first timer stops in response to any one or more of the following events:
the first terminal receiving a sidelink radio resource control reconfiguration completion message from the target second terminal;
the first terminal successfully sending a sidelink radio resource control reconfiguration message to the target second terminal;
the first terminal receiving the sidelink radio resource control reconfiguration failure message from the target second terminal;
the first terminal receiving the sidelink notification message from the target second terminal;
the first terminal successfully sending a radio resource control reconfiguration completion message to the target second terminal;
the first terminal successfully sending a specific RB to the target second terminal; or
the first terminal receiving a specific RB from the target second terminal.

24. The method according to claim 22, wherein the sidelink radio resource control reconfiguration message sent by the first terminal to the target second terminal comprises third indication information, and the third indication information indicates an addition of the indirect link.

25. The method according to any one of claims 20 to 24, wherein a duration of the first timer is comprised in the first indication information.

26. The method according to claim 21, wherein the target cell list is comprised in the first indication information.

27. The method according to claim 20, wherein the second indication information further indicates a cause of the failure to add the indirect link.

28. The method according to claim 20, wherein the second indication information comprises an identifier of at least one candidate second terminal.

29. The method according to claim 28, wherein a channel measurement result of the at least one candidate second terminal is higher than a first threshold value.

30. The method according to claim 29, wherein the first threshold value is indicated by the network device, or the first threshold value is pre-defined.

31. The method according to any one of claims 28 to 30, wherein the second indication information further comprises a channel measurement result of the at least one candidate second terminal.

32. The method according to any one of claims 29 to 31, wherein the channel measurement result is a sidelink-reference signal receiving power (SL-RSRP) and/or a sidelink discovery signal-reference signal receiving power (SD-RSRP).

33. The method according to claim 28, wherein the second indication information further comprises an identifier of a serving cell for the at least one candidate second terminal.

34. The method according to any one of claims 20 to 33, wherein the second indication information is transmitted via a direct link between the first terminal and the network device.

35. An apparatus for adding an indirect link, configured in a first terminal, comprising:
a transceiver unit, configured to receive first indication information sent by a network device, wherein the first indication information indicates the first terminal to add the indirect link, and the first indication information comprises an identifier of a target second terminal;
a processing unit, configured to add, based on the first indication information, the indirect link connected to the network device via the target second terminal; and
the transceiver unit being further configured to send second indication information to the network device in response to determining a failure to add the indirect link, wherein the second indication information is used to indicate the failure to add the indirect link.

36. An apparatus for adding an indirect link, configured in a network device, comprising:
a transceiver unit, configured to send first indication information to a first terminal, wherein the first indication information comprises an identifier of a target second terminal, the first indication information indicates the first terminal to add the indirect link connected to the network device via the target second terminal; and
the transceiver unit being further configured to receive second indication information being sent by the first terminal in response to determining a failure to add the indirect link, wherein the second indication information indicates the failure to add the indirect link.

37. A communication device, comprising a processor and a memory, the memory stores a computer program, the processor is configured to execute the computer program stored in the memory, causing the device to perform the method according to any one of claims 1 to 19, or the processor is configured to execute the computer program stored in the memory, causing the device to perform the method according to any one of claims 20 to 34.

38. A communication device, further comprising a processor and an interface circuit; wherein
the interface circuit is configured to receive code instructions and transmit the code instructions to the processor; and
the processor is configured to run the code instructions to execute the method according to any one of claims 1 to 19, or is configured to run the code instructions to execute the method according to any one of claims 20 to 34.

39. A computer-readable storage medium for storing instructions that, when executed, enable the method according to any one of claims 1 to 19 to be implemented, or, when executed, enable the method according to any one of claims 20 to 34 to be implemented.
